# EUROPEAN PATENT APPLICATION

(11) **EP 1 518 833 A1**
(43) Date of publication of application: **30.03.2005**
(21) Application number: 04021569.1
(22) Date of filing: 10.09.2004
(51) Int. Cl.: C03B 37/014

(54) **Apparatus and method for manufacturing optical fiber preform**

(30) Priority: 18.09.2003 KR 2003064780
(71) Applicant: Samsung Electronics Co., Ltd., Suwon-si, Gyeonggi-do (KR)
(72) Inventor: Kang, Guy-Young, Yeongtong-gu, Suwon-si, Gyeonggi-do (KR); Lee, Yeong-Seop, Yeongtong-gu, Suwon-si, Gyeonggi-do (KR)
(74) Representative: Lang, Johannes, Dipl.-Ing.

(57) **Abstract**

An apparatus and method for simultaneously manufacturing a plurality of optical fiber preforms by an outside vapour deposition process (OVD) are provided. The apparatus comprises a spraying unit (330) having a plurality of nozzles (331), serving to spray a flame and a material gas, and a supporting unit (320) for supporting and rotating a plurality of base rods (340) arranged around the spraying unit.

## Description

### BACKGROUND OF THE INVENTION

### 1. Field of the Invention

The present invention relates to an apparatus and method for manufacturing an optical fiber preform and, more particularly, to an apparatus and method for manufacturing an optical fiber preform through an outside vapor phase oxidation method.

### 2. Description of the Related Art

Generally, a process for manufacturing an optical fiber comprises the steps of manufacturing an optical fiber preform and producing the optical fiber having a predetermined diameter from the manufactured optical fiber preform.

Known methods of manufacturing the optical fiber preform include a modified chemical vapor phase deposition method, an inside vapor phase oxidation method, an outside vapor phase oxidation method, a vapor phase axial deposition method, a plasma chemical vapor deposition method, etc.

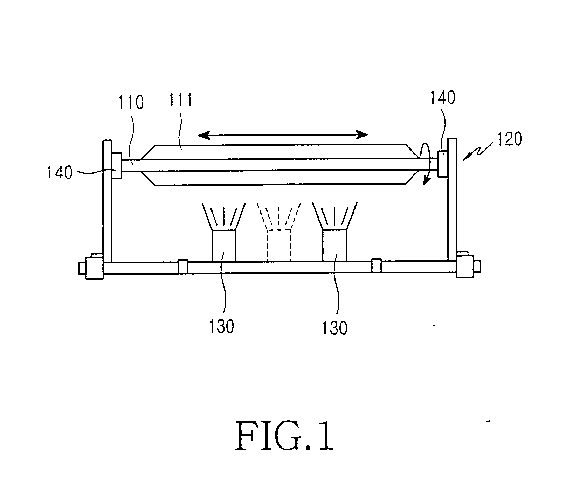

Fig. 1 illustrates a conventional apparatus used to manufacture an optical fiber preform. As shown, the apparatus comprises a plurality of torches 130 for generating a flame and a material gas onto a base rod 110, chucks 140 for rotating and supporting the base rod 110, and a rack 120 for supporting the torches 130 and the chucks 140.

The torches 10 spray the flame generated by igniting fuel such as H₂, O₂, etc., and the material gas such as SiCl₄, GeCl₄, etc., onto the base rod 110. The flame and the material gas sprayed onto the base rod 110 generate particles such as SiO₂, GeO₂, etc., and then the generated particles are deposited on the base rod 110, thereby producing a soot layer 111 on the base rod 110.

The chucks 140 support both ends of the base rod 110 and rotate the base rod 110. In particular, the chucks 140 rotate the base rod 110 so that the soot layer 111 having a uniform thickness is deposited on the base rod 110.

The rack 120 serves as a work bench, on which the soot layer 111 is deposited on the base rod 110, and supports the torches 130 and the chucks 140.

The above apparatus can be modified to manufacture a plurality of optical fiber preforms and may include a plurality of base rods located on a rack for simultaneously depositing a soot layer thereon, chucks for rotating each of the base rods, and torches.

In the above-described conventional structures, since the deposited soot layer has a density gradient along a major axis of the soot layer, there is a difference in the amount of the deposited soot layer according to a radial direction of the base rod. In addition, an irregular amount of the deposited soot layer in a spiral shape may be generated due to the rotation of the base rod. In particular, each of the soot layers deposited on the base rods requires torches, which in turn causes a difficulty in simultaneously obtaining a plurality of soot layers with uniform quality. Furthermore, each of the soot layers deposited on the base rods requires chucks and torches, thereby increasing the installation cost of the apparatus.

### SUMMARY OF THE INVENTION

Therefore, the present invention has been made in view of the above problems and provides additional advantages, by providing an apparatus for manufacturing an optical fiber preform, in which a plurality of soot layers with a uniform quality can be manufactured easily.

In accordance with one aspect of the present invention, an apparatus for manufacturing an optical fiber preform includes: a spraying unit including nozzles arranged in a substantially vertical orientation for providing a flame and a material gas in a radial direction to form the optical fiber preform; and, a supporting unit for supporting and rotating the base rods arranged around the spraying unit so that soot layers having a uniform thickness can be formed on the base rods as they rotate.

Preferably, a plurality of the base rods may surround the spraying unit having a plurality of the nozzles, and the base rods may be rotated centering around the spraying unit, thereby allowing a plurality of soot layers having the same quality to be simultaneously deposited on the base rods.

In accordance with another aspect of the present invention, a method for manufacturing an optical fiber preform includes the steps of: (a) arranging a plurality of base rods around a spraying unit for spraying a flame and a material gas; (b) rotating the base rods; and (c) depositing soot layers respectively on the base rods by spraying the flame and the material gas onto the base rods.

Preferably, a plurality of the base rods may surround the spraying unit having a plurality of the nozzles, and the base rods may be rotated centering around the spraying unit, thereby allowing a plurality of the base rods having the same quality to be simultaneously manufactured.

### BRIEF DESCRIPTION OF THE DRAWINGS

The above features and other advantages of the present invention will be more clearly understood from the following detailed description taken in conjunction with the accompanying drawings, in which:
- Fig. 1: is a schematic view of a conventional apparatus for manufacturing an optical fiber preform;
- Fig. 2: is a schematic view of an apparatus for manufacturing an optical fiber preform, in which a plurality of soot layers is simultaneously manufactured, in accordance with one embodiment of the present invention;
- Fig. 3: is a perspective view of the apparatus shown in Fig. 2; and,
- Fig. 4: is a planar view illustrating a driving unit of the apparatus shown in Fig. 3.

### DETAILED DESCRIPTION OF THE INVENTION

Now, an embodiment of the present invention will be described in detail with reference to the annexed drawings. For the purposes of clarity and simplicity, a detailed description of known functions and configurations incorporated herein will be omitted as it may make the subject matter of the present invention unclear.

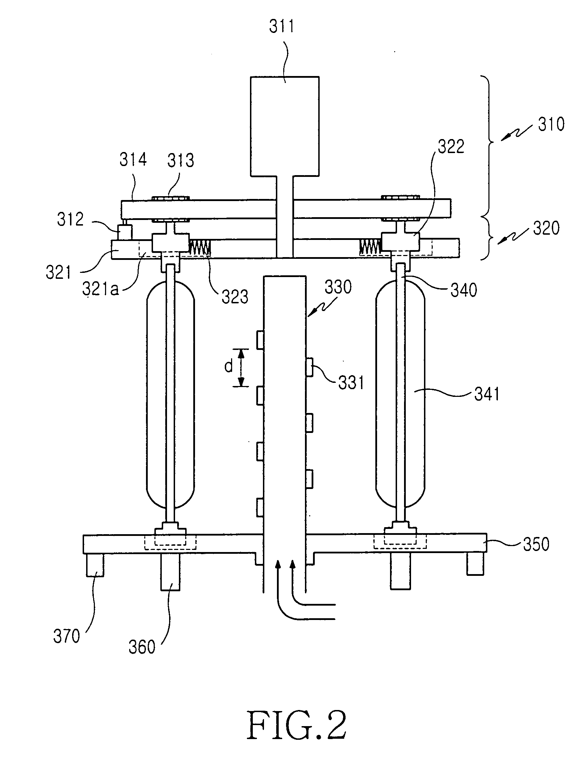

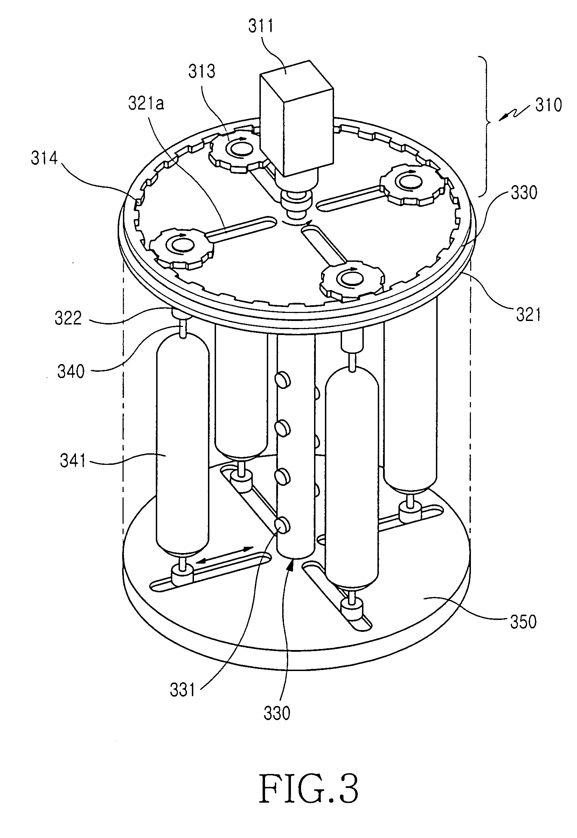

Fig. 2 is a schematic view of an apparatus for manufacturing an optical fiber preform, in which a plurality of soot layers is simultaneously manufactured, in accordance with one embodiment of the present invention. Fig. 3 is a perspective view of the apparatus shown in Fig. 2.

With reference to Figs. 2 and 3, the apparatus according to the present invention includes a spraying unit 330 for spraying a flame and a material gas, a supporting unit 320 for supporting a plurality of base rods 340, a driving unit 310 for transmitting a rotary force to the supporting unit 320, a lower frame 350, a control unit 370 for outputting a control signal, and a control means 360 for adjusting the height of the base rods 340.

The spraying unit 330 includes a plurality of nozzles 331 arranged in a major axis thereof, and the nozzles 331 serve to spray the flame and the material gas onto the corresponding base rods 340. The material gas sprayed onto the rods 340 chemically reacts with the flame, thereby generating substances such as SiO₂, GeO₂, etc. The generated substances are deposited onto the base rods 340, thus producing soot layers 341.

The supporting unit 320 includes a plurality of chucks 322 respectively connected to the base rods 340 that are arranged around a rotary axis, and a frame 321 extended from the rotary axis in a diametric direction for supporting the chucks 322.

The frame 321 is extended from the rotary axis in the diametric direction and includes a plurality of guide grooves 321 a formed therethrough. Each of the chucks 322 is mounted in the guide grooves 321a. An elastic member 323 for controlling the position of the corresponding chuck 322 is inserted in a gap of the guide grooves 321a.

The chucks 322 are respectively connected to the corresponding base rods 340 arranged around the rotary axis and mounted in the corresponding guide grooves 321a. Further, the rotary force generated by the driving unit 310 is transmitted to the base rods 340 by connecting the upper portions of the corresponding chucks 322 to the driving unit 310.

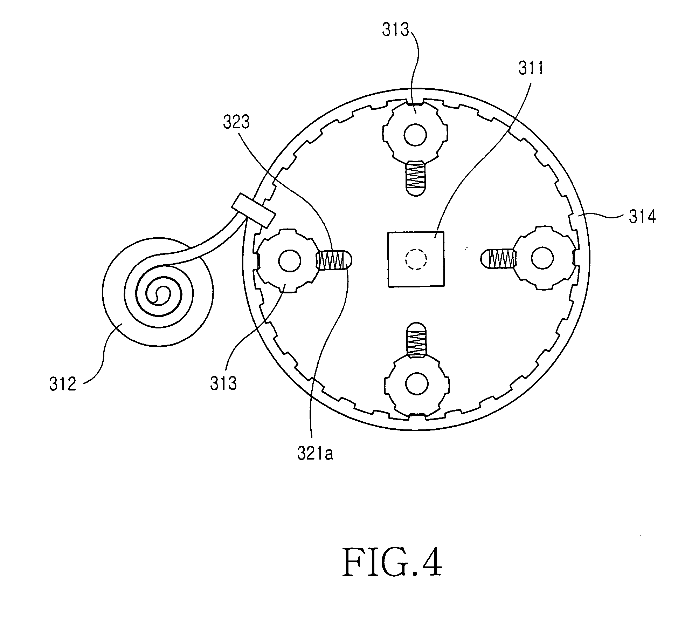

Fig. 4 is a planar view of the driving unit of the apparatus shown in Fig. 3. As shown, the driving unit 310 includes a first prime mover 311 for generating a rotary force to rotate the frame 321, first gears 313 respectively connected to the upper ends of the chucks 322, a second gear 314 for transmitting a rotary force to the first gears 313, and a second prime mover 312 for generating a rotary force to rotate the second gear 314.

The first prime mover 311 connects a shaft axis thereof to a central portion of the frame 321, thereby generating the rotary force to rotate the frame 321 around the rotary axis.

One end of the second gear 314 is wound on a shaft axis of the second prime mover 321, and the second prime mover 314 serves to generate the rotary force to rotate the second gear 314. A servo or step motor may be used as the second prime mover 321.

Each of the first gears 313 is connected to the upper end of the corresponding chucks 322 protruding from the upper surface of the frame 321 and transmits the rotary force transmitted from the second gear 314 to the corresponding chucks 322, thereby rotating the corresponding base rods 340 fixed to the chucks 322.

A plate spring having electricity may be used as a second gear 314. In this case, the plate spring includes a gear teeth formed on an inner surface thereof and engaged with the gear teeth of the first gears 313 at a designated gear ratio. That is, the inner surface of the second gear 314, which is a type of sun gears, is engaged with the outer surfaces of the first gears 313. As a result, the second gear 314 transmits the rotary force generated from the second prime mover 312 to the first gears 313. Here, the second gear 314 employs the plate spring having electricity wound on the shaft axis of the second prime mover 312, thus having a diameter varied according to the increase in the outer diameters of the base rods 340.

Accordingly, the second gear 314 transmits the rotary force generated by the second prime mover 312 to the first gears 313, thus rotating each of the base rods 340 respectively connected to the corresponding chucks 322. Further, the first prime mover 311 directly transmits the rotary force to the frame 321, thus moving the base rods 340 centering around the spraying unit 330.

That is, the frame 321 moves the base rods 340 centering around the spraying unit 330 by mounting each of the chucks 322 onto the corresponding one of the guide grooves 321 a, and causes the base rods 340 to rotate and rectilinearly reciprocate in the guide grooves 321 a according to the variation in the diameter of the second gear 314.

More specifically, in case that the diameter of the second gear 314 is decreased, the chucks 322 are directed close toward the central portion of the frame 321 along the guide grooves 321a. However, in case that the diameter of the second gear 314 is increased, the chucks 322 are directed toward the edge portion of the frame by the electricity of the electric members 323 inserted into the guide grooves 321 a.

The lower frame 350 is opposite the lower surface of the frame 321, thereby supporting the base rods 340 and the spraying unit 330.

The control unit 370 senses variation in the weight of the base rods 340 and then outputs a control signal for controlling the height of the base rods 340 according to the variation in the weight of the base rods 340.

The control means 360 adjusts the height of the base rods 340 according to the control signal outputted from the control unit 370 and employs an air cylinder or a motor.

During the process of manufacturing an optical fiber preform, the height of the base rods 340 is determined in consideration of the length and weight of the soot layers 341 and a separation interval (d) between the torches 331.

For example, during the optical fiber preform manufacturing process, the height of the base rods 340 is determined in consideration of the total weight of the soot layers 341 to be deposited. Further, the height of the base rods 340 is determined so that the interval between the torches 331 is a quarter pitch. As apparent from the above description, the present invention provides an apparatus and method for manufacturing an optical fiber preform, in which the optical fiber preform is deposited on a plurality of base rods rotating around a spraying unit having plural nozzles for spraying a flame and a material gas, thereby obtaining plural optical fiber preforms deposited on the base rods in the same deposition condition. In essence the plural base rods are arranged around the spraying unit for spraying the frame and the material gas, thereby reducing production cost and improving productivity of the optical fiber preform.

Although only one embodiment of the present invention has been described in detail, those skilled in the art will appreciate that various modifications, additions, and substitutions to the specific elements are possible, without departing from the scope and spirit of the invention as disclosed in the accompanying claims.

## Claims

1. An apparatus for manufacturing an optical fiber preform, comprising:
a spraying unit having a plurality of nozzles in a substantially vertical orientation for providing a flame and a material gas; and
a supporting unit for rotating a plurality of base rods in a substantially parallel relationship around the spraying unit so that the flame and the material gas can be applied onto the plurality of base rods during rotation.

2. The apparatus as set forth in claim 1, further comprising a driving unit for generating a rotary force on the supporting unit to rotate the plurality of base rods.

3. The apparatus as set forth in claim 1, further comprising a control means for adjusting the height of the base rods.

4. The apparatus as set forth in claim 2, further comprising a plurality of chucks respectively coupled to the upper portions of the plurality of rods and rotably coupled within the driving unit.

5. An apparatus for manufacturing an optical fiber preform, comprising:
a spraying unit having a plurality of nozzles in a substantially vertical orientation for providing a flame and a material gas in a radial direction;
a plurality of base rods arranged around a rotary axis of the spraying unit;
a frame having a plurality of chucks rotably coupled thereto;
a first prime mover for generating a rotary force on the frame around the rotary axis of the spraying unit;
a plurality of first gears respectively coupled to the upper ends of the chucks;
a second gear engaged with the first gears for transmitting a rotary force on each of the base rods; and,
a second prime mover for generating a rotary force on the second gear.

6. The apparatus as set forth in claim 5,wherein the frame is provided with a plurality of guide grooves formed therein for housing the plurality of chucks.

7. The apparatus as set forth in claim 6, further comprising elastic members respectively inserted into each gap of the guide grooves for controlling the position of the chucks.

8. The apparatus as set forth in claim 5, wherein the diameter of the second gear is controlled by a rotational direction of the second prime mover.

9. The apparatus as set forth in claim 5, further comprising:
a control unit for detecting the weight of the base rods as being sprayed with the flame and the material gas and outputting a control signal to control the height of the base rods according to the variation in the detected weight; and
control means for adjusting the height of the base rods according to the control signal outputted from the control unit.

10. The apparatus as set forth in claim 5, wherein each of the chucks rectilinearly reciprocates along the respective guide grooves by means of an elastic member inserted in each of the guide grooves and according to the variation in the diameter of the second gear.

11. The apparatus as set forth in claim 5, wherein the material gas sprayed onto the base rods chemically reacts with the flame to form soot layers.

12. A method for manufacturing an optical fiber preform, comprising the steps of:
arranging a plurality of base rods around a spraying unit in a substantially vertical orientation; and
rotating the plurality of base rods as a flame and a material gas from the spraying unit is applied to the base rods to form soot layers having a uniform thickness.
